Europäisches Patentamt

European Patent Office

Office européen des brevets

(11) Numéro de publication: **0 206 955**
**A1**

(12) **DEMANDE DE BREVET EUROPEEN**

(21) Numéro de dépôt: 86420155.3

(22) Date de dépôt: **16.06.86**

(51) Int. Cl.⁴: **F16B 7/18 , E04B 5/58**

(30) Priorité: **20.06.85 FR 8509751**

(43) Date de publication de la demande:
**30.12.86 Bulletin 86/52**

(84) Etats contractants désignés:
**AT BE CH DE GB IT LI LU NL SE**

(71) Demandeur: **Bonne, Paul**
**18 Résidence "Les Plantes"**
**F-78620 L'Etang la Ville(FR)**

(72) Inventeur: **Bonne, Paul**
**18 Résidence "Les Plantes"**
**F-78620 L'Etang la Ville(FR)**

(74) Mandataire: **Maisonnier, Jean**
**Bureau Maisonnier 28 Rue Servient**
**F-69003 Lyon(FR)**

(54) **Suspente réglable pour l'industrie du bâtiment, notamment pour la mise en place de plafonds suspendus.**

(57) L'invention concerne une suspente (1) réglable en longueur , utilisée avec d'autres suspentes analogues pour suspendre un faux-plafond à une charpente.

Le fourreau tubulaire (2) est fendu en (7) et comporte en (6) un filetage intérieur . la tige télescopique (3) est filetée . A la position voulue , on l'immobilise en faisant coulisser le manchon (9) jusqu'en (6) , pour resserrer les fe,tes (7) sur le filetage de la tige (3) .

Application : possibilités de réglage rapide et précis , même alors que le faux-plafond est déjà suspendu à (3) .

Fig 1

EP 0 206 955 A1

# "SUSPENTE REGLABLE, POUR L'INDUSTRIE DU BATIMENT, NOTAMMENT POUR LA MISE EN PLACE DE PLAFONDS SUSPENDUS"

La présente invention est relative à une suspente à longueur réglable , du genre de celles qu'on utilise notamment dans l'industrie du bâtiment . Les suspentes de ce type ont par exemple , pour fonction , d'assurer le maintien en place d'un faux-plafond , qu'il s'agit de maintenir suspendu à une charpente placée au-dessus.

Dans ce cas , chaque suspente se présente sous la forme d'un élément vertical dont le sommet comporte des moyens pour assurer son accrochage à la charpente supérieure . Par contre , chaque suspente comporte , à son extrémité inférieure , une patte à laquelle vient s'accrocher la partie correspondante du plafond suspendu . La charpente présente une forme le plus souvent irrégulière , d'autant plus qu'elle définit une ou plusieurs pentes , pour la toiture qui la surmonte . Par contre , les panneaux qu'on suspend pour former le plafond doivent , en général , être juxtaposés avec précision pour définir un plafond plan , bien horizontal . Il est donc nécessaire de prévoir , pour chaque suspente , une structure permettant de régler sa longueur , puis de la bloquer à la longueur choisie .

Dans ce but ,la plupart des suspentes de type connu comportent une tige filetée longitudinale , vissée dans un écrou . Il suffit de faire tourner l'écrou par rapport à la tige filetée , pour régler la longueur de l'ensemble. Ce système connu présente divers inconvénients , notamment :

-les opérations de réglage sont très longues à effectuer ; en effet , la longueur d'une suspente étant couramment de l'ordre de cinquante à cent centimètres , on imagine le temps qu'il faut à l'opérateur , pour déplacer chaque écrou sur plusieurs dizaines de centimètres ,le long de sa tige filetée ; ou pour couper la tige à longueur .

-lorsqu'au cours des opérations de pose , un panneau de faux-plafond a été suspendu à la charpente au moyen de plusieurs suspentes , la partie supérieure de chaque suspente est immobilisée par rapport à la charpente , tandis que la patte inférieure de chaque suspente est immobilisée par rapport au panneau . Il n'est donc plus possible de régler la longueur de chaque suspente par rotation de son écrou par rapport à la tige filetée : le réglage d'une suspente doit être effectué avant sa mise en place , si bien qu'il est difficile d'obtenir , pour les panneaux , un positionnement final précis ;

-il est souvent impossible , ou tout au moins difficile , d'adapter à l'extrémité d'une suspente , une allonge permettant d'augmenter la longueur totale disponible .

La présente invention a pour but d'éviter ces inconvénients , en réalisant une suspente d'un type nouveau , permettant une importante économie de main-d'oeuvre lors des opérations de pose , et assurant , pour la pose ,un résultat final extrêmement précis et de qualité .

Une suspente télescopique selon l'invention , comprend un élément supérieur que surmontent des moyens d'accrochage à la charpente , et un élément inférieur que terminent , vers le bas , des moyens pour sa fixation sur le dispositif à suspendre , alors que des moyens sont prévus pour régler et verrouiller les positions relatives des deux éléments supérieur et inférieur , et elle est caractérisée en ce que l'un des deux éléments est constitué par un fourreau tubulaire , portant , à son extrémité libre , d'une part , un crantage transversal interne , d'autre part , au moins une fente longitudinale ,l'autre élement étant constitué par une tige le long de laquelle est disposé un crantage transversal complémentaire , des moyens étant enfin prévus sur l'élément tubulaire , pour le resserrer et le bloquer dans les crans de l'élément complémentaire , une fois effectué le réglage en longueur .

Suivant une autre caractéristique de l'invention , le fourreau tubulaire appartient à l'élément supérieur de la suspente , alors que la tige crantée constitue l'élément inférieur , susceptible d'être télescopé dans le tube.

Suivant une autre caractéristique de l'invention , les crans de blocage sont constitués par un simple pas de vis , auquel cas , la tige crantée est une simple tige filetée , alors que le crantage interne de l'élément tubulaire est équivalent à un simple écrou fendu , susceptible d'être resserré autour de la tige filetée .

Suivant une autre caractéristique de l'invention , les moyens de verrouillage équipant l'élément tubu laire sont constitués par un manchon coulissant le long de la face extérieure du fourreau tubulaire , dont un bossage extérieur équipant sa partie fendue , permet de resserrer celle-ci sur la tige filetée , lorsqu'on y engage le manchon.

Suivant une autre caractéristique de l'invention , le fourreau possède deux fentes longitudinales diamétricalement opposées , et dont les bords sont écartés pour diverger en position de repos , alors que sa paroi est rétreinte vers l'intérieur , dans la zone filetée intérieurement .

Suivant une autre caractéristique de l'invention, on intercale entre l'élément supérieur tubulaire , et la tige inférieure filetée de la suspente , une allonge ,constituée par un fourreau tubulaire fendu analogue au précédent , mais dont le sommet se prolonge vers le haut, par un tronçon d'une tige filetée analogue à celle de la suspente proprement dite .

Grâce à cette dernière disposition , on comprend qu'on puisse placer bout à bout , et les verrouiller les unes dans les autres , un nombre quelconque d'allonges , pour obtenir finalement une suspente composite présentant les mêmes avantages de réglage télescopique que la seule suspente proprement dite .

Le dessin annexé , donné à titre d'exemple non limitatif , permettra de mieux comprendre les caractéristiques de l'invention .

Figure 1 est une vue latérale d'une suspente proprement dite , en position déverrouillée .

Figure 2 en est une coupe longitudinale en position verrouillée .

Figure 3 est une coupe longitudinale analogue , montrant une allonge intercalée entre les deux éléments d'une suspente .

Figure 4 est un schéma d'ensemble , illustrant le principe d'utilisation des suspentes , pour la mise en place d'un plafond suspendu .

Figure 5 illustre un détail pendant les opérations de mise en place d'un panneau.

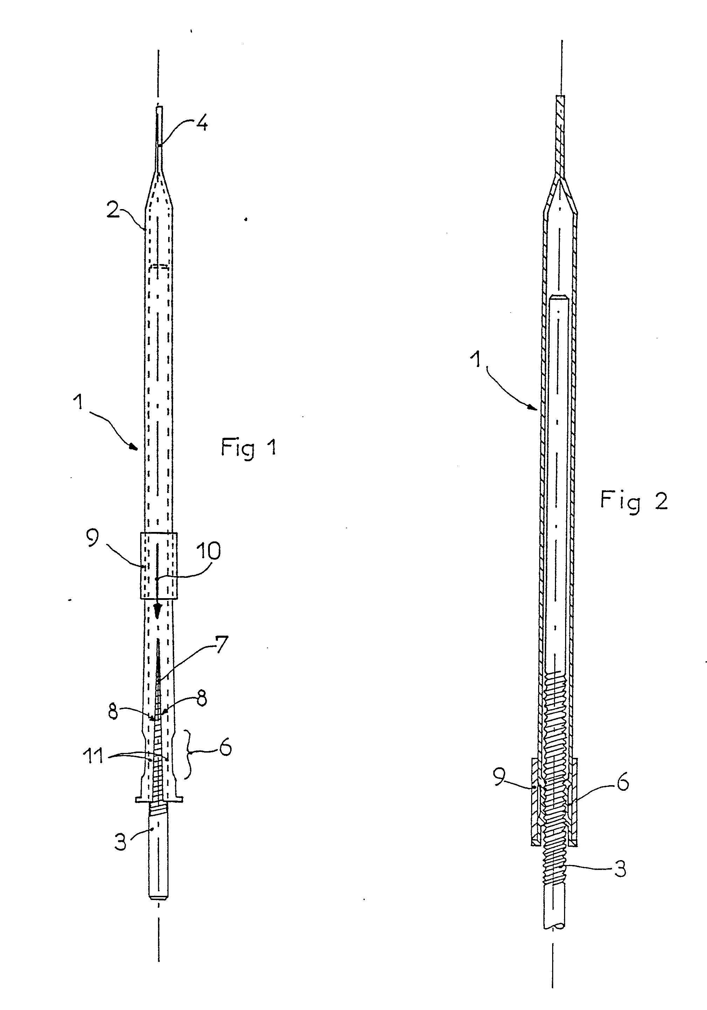

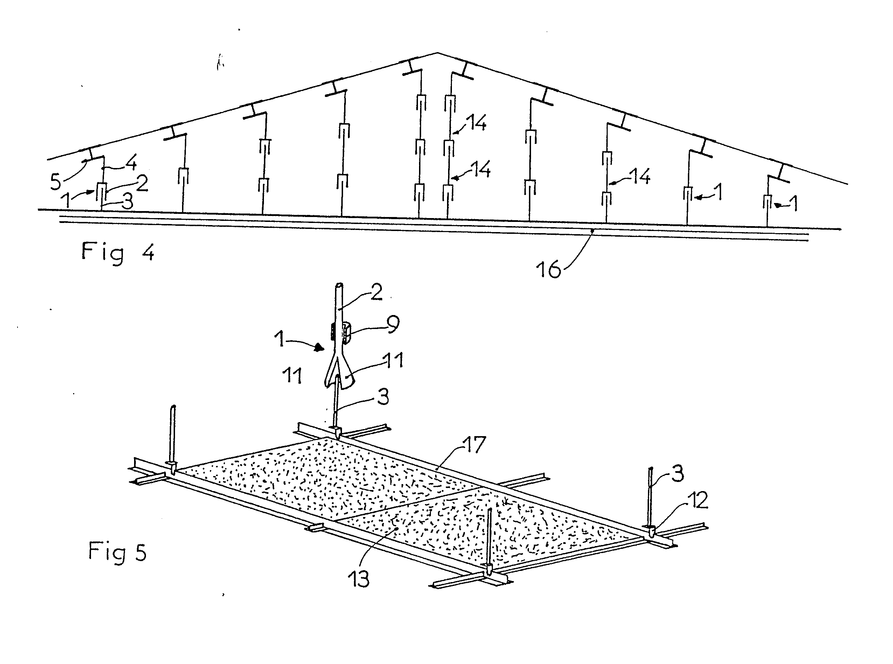

La suspente télescopique 1 illustrée sur les figures 1 et 2 , comprend un fourreau tubulaire supérieur 2 , à l'intérieur duquel peut coulisser librement , une tige filetée inférieure 3 . A son sommet , le fourreau tubulaire 2 est préférablement aplati , de façon à définir une patte d'accrochage 4 , susceptible d'être accrochée par tout moyen connu , aux poutrelles ou analogues 5 d'une charpente ( figure 4) .

A sa partie inférieure , le fourreau tubulaire 2 est à la fois :

-rétreint dans une zone 6 ;

-fendu suivant deux fentes longitudinales 7 diamétralement opposées .

De plus , on écarte les bords 8 de chaque fente 7 , de façon à les faire diverger vers le bas lorsque l'ensemble est au repos ( figure 1) .

Enfin , la paroi interne du fourreau 2 est filetée , sur toute la longueur de la zone 6 , suivant un filetage dont le pas correspond à celui de la tige filetée 3.

Un manchon tubulaire 9 coulisse librement le long de la paroi extérieure du fourreau 2 , dans la zone où celui-ci n'est pas fendu . Par contre , si l'on repousse le manchon 9 à force vers le bas - (figure 1 , flèche 10) , on provoque progressivement le resserrement des deux demi-coquilles 11 séparées par les fentes 7 . Ces fentes qui étaient évasées au repos (figure 1) , se referment jusqu'à ce que la zone taraudée 6 vienne s'imbriquer dans le filetage de la tige 8 (figure 2) . Le blocage ainsi réalisé est tout à fait particulier , car il assure simultanément deux fonctions, à savoir :

-d'une part , il devient impossible de déplacer rapidement la tige 8 par simple coulissement longitudinal à l'intérieur du fourreau 2 ( réglage rapide) ;

-par contre , il reste toujours possible de visser ou dévisser la tige filetée 3 en la faisant tourner dans l'écrou que constituent les deux demi-coquilles 11 refermées (figure 2) . Pour les phases opératoires où la structure du chantier permet de faire tourner la tige 3 dans le fourreau 2 , cette manoeuvre permet de réaliser un réglage fin , réservé à de petites longueurs.

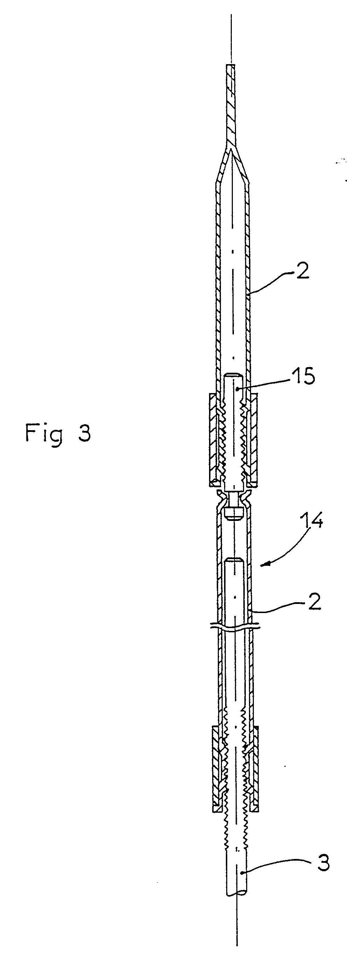

A sa partie inférieure , la tige filetée 3 est pourvue de tout moyen tel qu'une patte 12 , permettant d'y suspendre un,ou plusieurs,panneau 13 . Dans la variante illustrée sur la figure 3 , on intercale , entre le fourreau 2 et la tige filetée 3 d'une suspente , une allonge 14 qui est constituée à son tour par un fourreau tubulaire 2 analogue au précédent , mais dont le sommet est surmonté par un tronçon d'une tige filetée 15 , analogue à la tige 3 .

Le fonctionnement est le suivant :

Dans l'exemple illustré sur les figures 4 et 5 , on se propose de suspendre aux poutrelles 5 d'une charpente , des panneaux 13 prévus pour constituer finalement un plafond suspendu 16 . Chaque suspente 1 est accrochée à une poutrelle 5 , par sa partie supérieure , au moyen de la patte 4 .

A sa partie inférieure , chaque tige filetée 3 est fixée à des panneaux 13 , ou à leur armature d'encadrement 17 .

Selon l'emplacement de chaque suspente 1 , on peut , ou non , intercaler entre ses deux éléments 2 et 3 , une ou plusieurs allonges 14 qu'on verrouille en place .

En utilisant les manchons 9 , on verrouille les suspentes 1 à une longueur approximative correspondant à une position d'approche des panneaux 13 . Autrement dit , l'ensemble de ces panneaux constitue une ébauche de plafond , dont la planéité ou l'horizontalité reste à parfaire . Cette opération de réglage peut être effectuée suspente par suspente , par simple déverrouillage du manchon coulissant 9 , pour déplacer la tige filetée 3 dans le fourreau 2 . Une fois obtenue la position précise désirée , on verrouille à nouveau par mise en place du manchon 9 (figure 2) . On remarque que cette opération de réglage précis peut être effectuée après que l'ensemble du plafond 16 soit déjà suspendu aux diverses suspentes . Cela garantit l'obtention d'un résultat précis , et d'un plafond 16 d'excellente qualité , tout en réduisant notablement le temps de pose .

## Revendications

1 -Suspente télescopique comprenant un élément supérieur que surmontent des moyens d'accrochage à la charpente, et un élément inférieur, que terminent, vers le bas, des moyens pour sa fixation sur le dispositif à suspendre, alors que des moyens sont prévus pour régler et verrouiller les positions relatives des deux éléments supérieur et inférieur, l'un des deux éléments étant constitué par un fourreau tubulaire (2) portant, à son extrémité libre un crantage transversal interne, l'autre élément étant constitué par une tige (3) le long de laquelle est disposé un crantage transversal complémentaire, des moyens étant enfin prévus sur l'élément tubulaire (2), pour le resserrer et le bloquer dans les crans de l'élément complémentaire (3), une fois effectué le réglage en longueur, caractérisé en ce que les crans de blocage sont constitués par un simple pas de vis, auquel cas la tige crantée (3) est une simple tige filetée alors que l'élément tubulaire (2) possède une fente longitudinale (7) si bien que son crantage interne est équivalent à un simple écrou fendu, susceptible d'être resseré autour de la tige filetée - (3).

2 -Suspente suivant la revendication 1, caractérisée en ce que le fourreau tubulaire (2) appartient à l'élément supérieur de la suspente, alors que la tige crantée (3) constitue l'élément inférieur, susceptible d'être télescopé dans le fourreau (2).

3 -Suspente suivant l'une quelconque des revendications précédentes, caractérisée en ce que les moyens de verrouillage équipant l'élément tubulaire (2) sont constitués par un manchon (9) coulissant le long de la face extérieure du fourreau tubulaire (2), dont un bossage extérieur équipant sa partie fendue,permet de resserer celle-ci sur la tige filetée (3) lorsqu'on y engage le manchon.

4 -Suspente suivant la revendication 3, caractérisée en ce que le fourreau (2) possède deux fentes longitudinales (7) diamétralement opposées, et dont les bords (8) sont écartés pour diverger en position de repos, et former le bossage extérieur, alors que sa paroi est réstreinte vers l'intérieur, dans la zone (6) filetée intérieurement.

5 -Suspente suivant l'une quelconque des reven dications précédentes, caractérisée en ce qu'on intercale entre l'élément supérieur tubulaire - (2), et la tige inférieure filetée (3) de la suspente - (1), une allonge (14) constituée par un fourreau tubulaire fendu (2), analogue au précédent, mais dont le sommet se prolonge vers le haut, par un tronçon (15) d'une tige filetée analogue à celle (3) de la suspente proprement dite.

6 -Suspente suivant la revendication 5, caractérisée en ce qu'elle est placée bout à bout avec un nombre quelconque d'allonges (14) verrouillées les unes dans les autres, pour obtenir finalement une suspente (1), (14), composite, prétendant les mêmes avantages de réglage télescopique que la seule suspente (1) proprement dite.

Fig 1

Fig 2

Fig 3

2

15

14

2

3

Fig 4

Fig 5

## DOCUMENTS CONSIDERES COMME PERTINENTS

| Categorie | Citation du document avec indication, en cas de besoin des parties pertinentes | Revendication concernee | CLASSEMENT DE LA DEMANDE (Int Cl 4) |
|---|---|---|---|
| X | CH-A- 483 543 (GRETSCH-UNITAS)<br>* En entier * | 1,2 | F 16 B 7/18<br>E 04 B 5/58 |
| A | | 3-6 | |
| | --- | | |
| A | FR-A-2 247 591 (DAEMPA)<br>* Revendication; figure * | 1,3 | |
| | --- | | |
| A | FR-A- 602 735 (BOUR)<br>* Résumé; figures * | 1 | |
| | --- | | |
| A | CH-A- 333 094 (GAUGER & CO.)<br>* Figure 2 * | 1 | |
| | ----- | | |

**DOMAINES TECHNIQUES RECHERCHES (Int. Cl.4)**

F 16 B
E 04 B

Le présent rapport de recherche a été établi pour toutes les revendications

| Lieu de la recherche | Date d'achèvement de la recherche | Examinateur |
|---|---|---|
| LA HAYE | 17-09-1986 | SCHAEFFLER C.A.A. |